Europäisches Patentamt

European Patent Office

Office européen des brevets

(11) Veröffentlichungsnummer: **0 166 191**
A2

# EUROPÄISCHE PATENTANMELDUNG

(21) Anmeldenummer: 85106187.9

(51) Int. Cl.⁴: **B 23 H 9/14**

(22) Anmeldetag: 21.05.85

(30) Priorität: 25.05.84 DE 3419502

(71) Anmelder: **AEG - Elotherm GmbH, Hammesberger Strasse 31, D-5630 Remscheid-Hasten (DE)**

(43) Veröffentlichungstag der Anmeldung: 02.01.86
Patentblatt 86/1

(72) Erfinder: **Wolter, Bernd, Henkelshof 2-4, D-5630 Remscheid 11 (DE)**
Erfinder: **Pott, Paul-G., Am Stadtrand 49, D-5632 Wermelskirchen 1 (DE)**

(84) Benannte Vertragsstaaten: **AT CH FR GB IT LI**

(74) Vertreter: **Patentanwaltsbüro Cohausz & Florack, Schumannstrasse 97, D-4000 Düsseldorf 1 (DE)**

(54) Elektrode zum elektrochemischen Durchbohren von metallenen Werkstücken.

(57) Die Erfindung bezieht sich auf eine Elektrode zum elektrochemischen Durchbohren von metallenen Werkstücken. Damit sich in der Endphase des Durchbohrens vor der Stirnseite der Elektrode keine dünne Membrane bildet, die durch den den Arbeitsspalt durchströmenden Querschnitt zu Schwingungen angeregt wird, soll die Stirnseite (2) geneigt zur Vorschubrichtung liegen, so daß das Durchbohren an einer, bezogen auf den Querschnitt der Elektrode, kleinen Stelle (8) erfolgt und die weitere Auflösung der vor der Stirnseite (2) liegenden Membrane (9) von dieser Durchbruchstelle aus fortschreitet, wobei ein ausreichend großer, die Steifigkeit der Membrane gewährleistender Querschnitt der Restmembrane erhalten bleibt.

0166191

Anm.: Fa. AEG-Elotherm GmbH,
        Hammesbergerstr. 31, 5630 Remscheid-Hasten

Elektrode zum elektrochemischen Durchbohren
von metallenen Werkstücken

Beim elektrochemischen Durchbohren mit herkömmlichen Elektroden, deren dem Werkstoff des Werkstückes zugewandte Stirnseite senkrecht zur Vorschubrichtung liegt, bildet sich in der Endphase des Durchbohrens eine verhältnismäßig dünne Metallmembrane, die aufgrund der durch den Arbeitsspalt strömenden Elektrolytflüssigkeit in Schwingung geraten kann. Deshalb besteht die Gefahr, daß die Metallmembrane Kontakt mit der Elektrode bekommt, so daß es wegen der dabei entstehenden Kurzschlüsse und Lichtbögen notwendig ist, den Prozeß des Durchbohrens zu unterbrechen.

Der Erfindung liegt die Aufgabe zugrunde, eine Elektrode zum elektrochemischen Durchbohren von metallenen Werkstükken zu schaffen, die gewährleistet, daß auch in der Endphase des Durchbohrens es nicht zu einem Kurzschluß oder zur Bildung von einem Lichtbogen kommt.

Diese Aufgabe wird erfindungsgemäß dadurch gelöst, daß die dem abzutragenden Werkstoff des Werkstückes zugewandte Stirnseite der Elektrode geneigt zur Vorschubrichtung liegt.

K/Tn.- 84/604 EP

0166191

Durch die Einstellung des Neigungswinkels läßt sich erreichen, daß der Durchbruch zunächst nur an einer kleinen Stelle erfolgt, während der übrige, noch zu durchbohrende Teil aufgrund seiner Verbindung bei einem großen Querschnitt mit dem Werkstück starr gehalten und gehindert wird, durch die Strömung der Elektrolytflüssigkeit zu schwingen. Da die vollständige Auflösung des vor der Stirnseite der Elektrode liegenden Werkstoffes von der kleinen Durchbruchstelle aus fortschreitet, kann sich keine schwingungsfähige Metallmembrane bilden.

Die Stirnseite kann verschiedene Gestalt haben. Sie kann eben sein, sie kann aber auch die Grundform eines Kegels, einer Pyramide oder Kugelkuppe haben. In allen Fällen ist gewährleistet, daß das noch nicht aufgelöste Material vor der Stirnseite der Elektrode noch ausreichende Steifigkeit hat und über einen genügend großen Querschnitt der starren Halterung mit dem übrigen Werkstück verbunden ist.

Im folgenden wird die Erfindung anhand einer zwei Ausführungsbeispiele darstellenden Zeichnung näher erläutert.
Im einzelnen zeigen

Fig. 1    eine Elektrode mit ebener Stirnseite im Axialschnitt in der Endphase des Durchbohrens und

Fig. 2    eine Elektrode mit kegeliger Stirnseite im Axialschnitt in der Endphase des Durchbohrens.

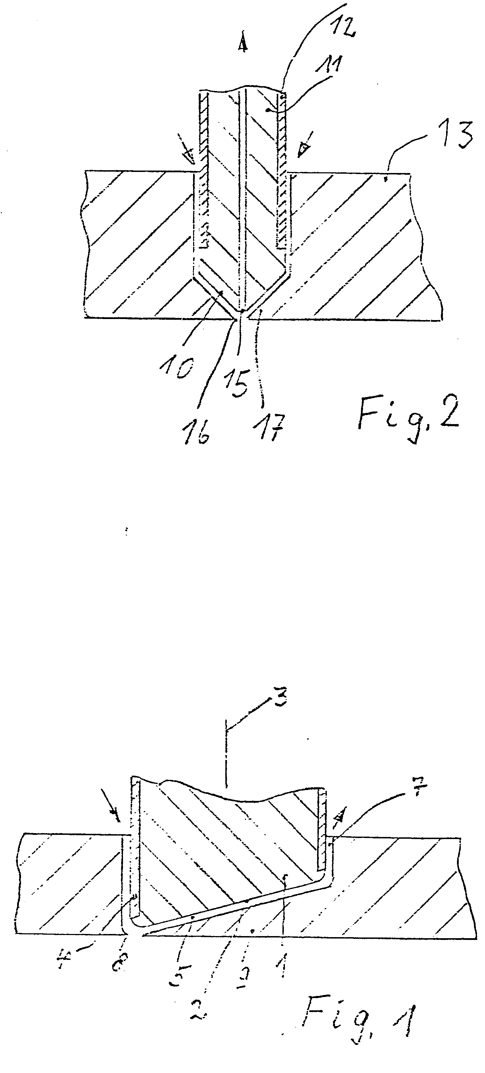

Die in Fig. 1 dargestellte Elektrode 1 hat einen zylindrischen oder prismatischen Querschnitt. Ihre Stirnseite 2 ist eben und liegt zur Vorschubachse 3 geneigt. Während die Stirnseite 2 freiliegt, ist die Elektrode 1 auf ihren Seiten von einem Isoliermantel 4 umhüllt, so daß nur die Stirnseite 2 abtragend wirksam sein kann. Die im Arbeitsspalt 5 benötigte Elektrolytflüssigkeit wird über eine Seite des zwischen dem Isoliermantel 4 und dem Werkstück 6 bestehenden Spalt eingeführt und kann auf der gegenüberliegenden Seite durch den Spalt 7 abströmen.

Wie die Fig. 1 zeigt, wird in der Endphase des Durchbohrens die vor der Stirnseite liegende Membrane 9 an einem Rand an einer kleinen Stelle 8 aufgelöst, während die übrige Membrane einen ausreichenden Querschnitt hat, um gegenüber der Strömung der Elektrolytflüssigkeit ausreichend steif zu sein, um nicht schwingen zu können. Bei fortschreitendem Vorschub wird die Membrane 9, ausgehend von der Durchbruchsstelle 8, aufgelöst, wobei für die Restmembrane der Querschnitt immer noch ausreichend groß ist, um der Membrane eine ausreichende, Schwingungen verhindernde, Steifigkeit zu geben.

Beim Ausführungsbeispiel der Fig. 2 hat die Stirnseite 10 der Elektrode 11 die Form eines Kegels. Die Stirnseite 10 liegt frei, während auf dem Umfang der Elektrode 11 ein Isoliermantel 12 sich befindet. Der Elektrolyt wird durch den zwischen dem Isoliermantel 12 und dem Werkstück 13 befindlichen Spalt eingeführt und kann nach Durchströmen des Arbeitsspaltes 14 durch einen zentralen Kanal 15 in der Elektrode 11 abströmen.

Wie beim ersten Ausführungsbeispiel wird auch bei diesem Ausführungsbeispiel der Werkstoff vor der Stirnseite 10 an einer kleinen Stelle 16 aufgelöst. Die verbleibenden Randbereiche 17 haben einen ausreichenden Querschnitt, um nicht durch den strömenden Elektrolyten zu Schwingungen angeregt zu werden. Mit fortschreitendem Vorschub werden diese Randbereiche von der kleinen Durchbruchstelle 16

0166191

ausgehend aufgelöst, wobei immer ein eine ausreichende Steifigkeit verleihender Querschnitt der Randbereiche erhalten bleibt.

Patentansprüche:

1. Elektrode zum elektrochemischen Durchbohren von metallenen Werkstücken, **d a d u r c h   g e k e n n z e i c h n e t ,** daß die dem abzutragenden Werkstoff des Werkstückes (4, 13) zugewandte Stirnseite (2,10) der Elektrode (1,11) geneigt zur Vorschubrichtung liegt.

2. Elektrode nach Anspruch 1, **d a d u r c h   g e k e n n z e i c h n e t ,** daß die Stirnseite (2) eben ist.

3. Elektrode nach Anspruch 1, **d a d u r c h   g e k e n n z e i c h n e t ,** daß die Stirnseite (10) die Grundform eines Kegels, einer Pyramide oder Kugelkuppe hat.

K/Tn.- 84/604
24.2.84

0166191

12

11

13

A

10  15

16  17

*Fig. 2*

3

7

4  8

5  2  9  1

*Fig. 1*